# FASCICULE DE BREVET EUROPEEN

(11) **EP 1 015 393 B1**
(45) Date de publication et mention de la délivrance du brevet: **17.05.2006**
(21) Numéro de dépôt: 99929435.8
(22) Date de dépôt: 08.07.1999
(51) Int. Cl.: C03B 32/00

(54) **PROCEDE D'IDENTIFICATION D'UN VITRAGE TRAITE THERMIQUEMENT PAR UN "HEAT-SOAK-TEST"**
VERFAHREN ZUR IDENTIFIKATION EINER DURCH EINEN "HEAT-SOAK-TEST" THERMISCH BEHANDELTEN GLASSCHEIBE
METHOD FOR IDENTIFYING A HEAT SOAK TESTED GLAZING

(30) Priorité: 10.07.1998 FR 9808927
(43) Date de publication de la demande: 05.07.2000
(73) Titulaire: SAINT-GOBAIN GLASS FRANCE, 92400 Courbevoie (FR)
(72) Inventeur: DAUBA, Henry, F-60280 Margny lès Compiègne (FR); BEYRLE, André, F-60170 Trancy le Val (FR); CHAUNAC, Michel, F-78114 Magny les Hameaux (FR)
(74) Mandataire: Le Cam, Stéphane Georges Elie
(86) Numéro de dépôt international: PCT/FR1999/001654
(87) Numéro de publication internationale: WO 2000/002825

(56) Documents cités:
- EP-A- 0 433 137
- EP-A- 0 773 439
- BE-A- 783 662
- DE-A- 2 043 942
- FR-A- 2 242 903

## Description

L'invention concerne un procédé de marquage et d'identification d'un vitrage ayant subi un traitement thermique. Le terme " vitrage " englobe des verres simples ou multiples, nus ou étant revêtus de couches minces, telles que des couches pyrolytiques, ou épaisses, telles que des émaux.

L'invention est décrite en référence à des vitrages ayant subi un traitement de type " Heat Soak Test ". Ce type de traitement permet, de façon destructive, la détection de sulfures de nickel dans des substrats en verre, tels que des feuilles de verre trempées, semi-trempées ou durcies.

La présence de sulfures de nickel dans de tels substrats en verre est connue de la littérature mais leurs origines ne sont pas très claires. Des origines multiples ont déjà été envisagées ; il pourrait provenir de la réduction des sulfates de sodium et de la réaction avec l'oxyde de nickel en provenance par exemple des buses de brûleurs. Il s'avère en effet qu'aujourd'hui aucune origine spécifique n'a pu être déterminée mais que ces sulfures de nickel sont présents dans le verre sous la forme de billes. Ces billes si elles ne nuisent pas aux principales propriétés recherchées des substrats en verre conduisent tout de même à un problème important dans le cas notamment des feuilles de verre trempées. En effet, la présence de ces inclusions de sulfures de nickel conduit à des casses dites " spontanées " des feuilles de verre trempées bien après leur réalisation. Certains cas recensés ont montré une casse d'une telle feuille de verre trempée plus de dix années après sa fabrication. Cet inconvénient est lourd de conséquences puisque les feuilles de verre ont bien entendu déjà été vendues puis utilisées. Par ailleurs, ce type de vitrages étant notamment utilisé pour l'habillage extérieur de façades de bâtiment, une casse des vitrages après leur installation peut conduire à de graves accidents dus à la chute desdits vitrages depuis par exemple des façades de bâtiment ou bien des toits vitrés couvrant des passages pour piétons.

Les différentes compositions de sulfure de nickel à l'origine de ces problèmes ont déjà été mises en évidence. Il s'agit notamment du sulfure de nickel stoechiométrique NiS, le Ni₇S₈ et des sulfures de nickel sous-stoechiométriques en nickel NiS₍₁₊ₓ₎ avec x variant de 0 à 0,08. Ces différentes compositions peuvent être présentes dans les vitrages sous la forme de billes cristallines, dont les diamètres pénalisants sont essentiellement compris entre 40 *µ*m et 1 mm.

Le phénomène qualifié précédemment de casses " spontanées " mais différées dans le temps a également déjà été expliqué. Les casses liées à la présence de sulfures de nickel dans le verre sont provoquées par la dilatation de volumes accompagnant la transformation de la phase α (phase héxagonale) à la phase β (phase rhomboédrique). La phase α est la phase " haute température " des sulfures de nickel, qui est métastable à température ambiante. La phase β est la phase " basse température ", stable à température ambiante. Il est ainsi compréhensible que si des sulfures de nickel existent dans leur phase α au sein de feuilles de verre prêtes à être utilisées ou déjà utilisées, des transformations vers la phase β vont apparaître au cours du temps.

La présence de sulfures de nickel dans leur phase α au sein de feuilles de verre à température ambiante s'explique, notamment dans le cas des feuilles de verre trempées, par le traitement thermique qu'elles ont subi ; en effet, dans le cas d'une trempe thermique, l'élévation de température de la feuille de verre peut conduire à l'apparition de phase α si des sulfures de nickel sont présents. Le refroidissement rapide qui suit ne permet pas du fait de sa vitesse un retour complet vers une phase β. Les feuilles de verre ainsi traitées peuvent donc comporter des sulfures de nickel en phase α qui vont se transformer dans le temps vers une phase β, ladite transformation s'accompagnant d'une augmentation de volume pouvant générer une casse des feuilles de verre.

Pour certaines utilisations de tels vitrages et notamment celles dans lesquelles, la casse desdits vitrages conduit à des risques d'accidents, il est donc nécessaire de détecter les feuilles de verre comportant des inclusions de sulfures de nickel susceptibles de provoquer une casse des feuilles de verre au cours du temps.

Une méthode, largement utilisée, de détection de sulfure de nickel, appelée " Heat Soak Test ", consiste à accélérer la transformation de la phase α, haute température, vers la phase β, basse température, par rapport à la vitesse de transformation à température ambiante. Une telle méthode consiste donc en un traitement thermique défini, conduisant comme indiqué précédement à une destruction des vitrages comportant des inclusions de sulfures de nickel.

Pour l'utilisation de telles feuilles de verre, par exemple pour l'industrie du bâtiment, il est important de pouvoir identifier les feuilles de verre trempées qui ont subi un traitement de détection de sulfures de nickel. En effet, si l'industrie du bâtiment autorise l'utilisation de feuilles de verre trempées qui n'ont pas subi ce traitement de détection, il est des utilisations qui requièrent des feuilles de verre exemptes d'inclusions de sulfures de nickel ; ces utilisations sont par exemple les garnitures de façades de bâtiment qui à partir d'une certaine hauteur rendent dangereuse l'utilisation de feuilles de verre pouvant présenter des casses spontanées dans le temps.

L'identification des vitrages ayant subi un traitement de détection apparaît donc nécessaire pour éviter tout risque de confusion entre des vitrages traités et d'autres non traités, qui peuvent par ailleurs être identiques. Il est en effet préférable de prévenir une confusion pouvant intervenir par exemple lors de la livraison ou du stockage.

Une solution pour le verrier consiste à apposer une étiquette sur les vitrages ayant subi un traitement de détection de sulfures de nickel. Toutefois, une telle solution peut présenter des inconvénients ; tout d'abord, quel que soit le type d'adhésion de l'étiquette, celle-ci peut être détériorée voire disparaître. D'autre part, elle nécessite une vigilance et une organisation infaillible pour interdire toute erreur et plus particulièrement l'apposition d'une étiquette sur un vitrage non traité. Si une telle organisation est réalisable, elle peut être délicate à mettre en oeuvre.

EP-A-0 433 137 divulgue des moyens pour identifier des feuilles de verre traitées thermiquement. Un marquage durable en émail est appliqué sur la surface des feuilles avant leur traitement thermique.

L'invention a ainsi pour but un procédé d'identification d'un vitrage traité, selon une technique du type " Heat Soak Test ", par un moyen inaltérable dans des conditions normales de manutention et de stockage.

Ce but est atteint selon l'invention par un procédé de marquage d'un vitrage trempé, semi-trempé ou durci, soumis à un traitement thermique de détection des sulfures de Nickel (Heat Soak Test) comprenant une température maximale, ledit marquage permettant d'identifier le traitement thermique qu'il a subi, consistant à fixer à sa surface et/ou sur un chant une substance avant ledit traitement thermique, une caractéristique optique de la substance étant modifiée en une caractéristique optique résultante définie par la température maximale atteinte lors dudit traitement thermique, le cas échéant après un palier à ladite température maximale, puis à effectuer ledit traitement thermique. Dans le cas de vitrages comportant des couches minces ou épaisses, la substance peut-être fixée soit sur le verre soit sur la couche.

L'invention concerne également un procédé d'identification d'un vitrage ayant subi un traitement thermique de détection des sulfures de Nickel, comprenant le procédé de marquage selon l'invention, suivi du contrôle du traitement thermique à partir de la caractéristique optique résultante.

Selon une réalisation préférée de l'invention, la caractéristique optique modifiée est la couleur. Ce choix permet notamment une reconnaissance visuelle très rapide de la modification. Lors d'un stockage ou de la constitution des vitrages, il est ainsi aisé d'éviter tout risque de confusion entre des vitrages traités.

D'autres caractéristiques optiques telles que la transmission lumineuse ou la brillance peuvent être utilisées.

Selon l'invention, une substance éventuellement colorée, est donc apposée sur le vitrage avant le traitement thermique, "Heat Soak Test" pour la détection de sulfures de nickel, et sa caractéristique optique évolue lors dudit traitement. Ce procédé selon l'invention autorise ainsi dans les conditions habituelles de manutention et de stockage, un marquage inaltérable des vitrages ayant subi ledit traitement thermique. Par ailleurs, ce procédé simplifie la mise en place de cette identification pour le verrier, ladite identification étant de par nature liée au traitement, il n'existe en effet pas de risque de marquer un vitrage non traité.

La température conduisant à une évolution de la caractéristique optique de la substance est bien entendu supérieure aux températures auxquelles peuvent être soumis les vitrages lors de leur stockage ou manutention chez le verrier et/ou l'utilisateur.

Selon une réalisation préférée de l'invention, la caractéristique optique résultante, c'est-à-dire la caractéristique optique modifiée de la substance obtenue après traitement est définie par la température maximale atteinte lors du traitement. Selon un tel mode de réalisation, il est en outre ainsi possible pour le verrier de vérifier et/ou de prouver que ladite température a bien été atteinte lors du traitement. Notamment dans le cas où plusieurs vitrages sont traités dans une enceinte chauffée, cette réalisation peut permettre de constater et/ou de contrôler que la température est atteinte en tout point de l'enceinte ou tout au moins en tout lieu de l'enceinte où les vitrages sont disposés lors du traitement.

Selon une variante avantageuse de l'invention, la modification de la caractéristique optique apparaît après un palier de traitement. Selon cette variante, la modification de la caractéristique optique est donc obtenue lorsque le vitrage a été traité à la température précédemment évoquée pendant un temps donné. Il est ainsi possible pour un traitement thermique comportant un palier, d'apposer sur le vitrage une substance dont la variation de la caractéristique optique dépend d'une part de la température de traitement et d'autre part du temps que le vitrage passe à cette température.

Une telle réalisation présente l'avantage pour le verrier de pouvoir contrôler non seulement la température dans l'enceinte lors du traitement, mais également la constance de cette température. En outre, il est ainsi possible au verrier de garantir à ses clients que le traitement thermique a effectivement été réalisé.

De préférence encore, l'invention prévoit que la caractéristique optique résultante de la substance est fonction du temps de séjour à une température atteinte lors du traitement thermique.

Selon cette dernière réalisation préférée de l'invention, il est possible en outre d'authentifier l'exécution du traitement thermique. En effet, la modification de la caractéristique optique est définie d'une part par la température mais également par le temps de séjour à cette température. Non seulement un temps plus court ne conduit pas à la modification de la caractéristique optique définie, mais en outre un temps plus long conduit également à une autre modification de la caractéristique optique.

Selon une variante et plus particulièrement dans le cas où la substance présente une modification de la caractéristique optique liée à une température atteinte lors du traitement mais indépendante du temps de séjour à cette température et d'un passage à des températures plus élevées, l'invention prévoit avantageusement que la substance est éliminée audites températures plus élevées. Cette variante de réalisation permet d'éviter un marquage de vitrages traités thermiquement lorsque des températures trop élevées sont atteintes durant le traitement, celles-ci ayant un effet inhibiteur voire contraire à celui désiré.

Plus particulièrement dans le cas d'un traitement du type " Heat Soak Test ", il est connu qu'à une température supérieure à environ 330°C, la transformation de la phase α vers le phase β n'est pas correctement obtenue du fait des cinétiques des deux réactions de transformation inverses. Il est alors intéressant d'éviter le marquage de vitrages ayant été traités à une température trop élevée et pour lesquels la détection de sulfures de nickel pouvant générer des casses spontanées, n'a pu être effectuée avec certitude.

Plus particulièrement encore la substance est déposée sur le vitrage après un traitement de trempe thermique. Il est ainsi possible de prévenir soit une variation de la caractéristique optique qui serait indépendante du traitement " Heat Soak Test ", soit une destruction de la substance, lors de la montée en température du verre pour effectuer la trempe thermique.

Selon une variante préférée de l'invention, la substance est une encre polymérisable. Il s'agit par exemple d'encre de type époxy, polyuréthane, acrylique, ...

Selon cette dernière variante, l'encre est avantageusement déposée sur un bord et/ou un chant d'un vitrage, celui-ci ayant déjà été trempé thermiquement. L'encre ainsi déposée est ensuite polymérisée à une température inférieure à celle modifiant la caractéristique optique lors du traitement thermique. Elle n'excède de préférence pas 220°C, notamment dans le cas d'un traitement de type " Heat Soak Test ". Lors d'un traitement de type " Heat Soak Test", le vitrage est porté à une température pouvant être comprise entre 270°C et 330°C. A ces températures, et éventuellement pour un temps donné, à une température, l'encre est dégradée ; cette dégradation se traduit visuellement notamment par une variation de la couleur qui atteste du passage à une température donnée et/ou d'un temps passé à une température donnée.

L'invention ainsi décrite permet donc de pouvoir identifier directement sur un vitrage le traitement thermique qu'il a subi, voire prouver la réalisation dudit traitement.

D'autres détails et caractéristiques avantageux de l'invention ressortiront ci-après de la description d'un exemple de réalisation.

Cet exemple concerne le marquage d'un vitrage traité thermiquement selon une méthode du type "Heat Soak Test " en vue de la détection d'inclusions de sulfures de nickel.

Au préalable, le vitrage subi une trempe thermique. Lors de ce traitement, la température du vitrage est élevée à environ 650°C. Lors de cette montée en température, si des inclusions de sulfures de nickels sont présentes, celles-ci se transforment de la phase β, basse température, en la phase α, haute température. Le refroidissement rapide qui suit conduit à un figeage de la phase α instable aux basses températures. La réaction de transformation de la phase α vers la phase β se poursuit alors, mais très lentement aux températures ambiantes lors de l'utilisation du vitrage. Ladite transformation peut s'opérer sur des durées très longues, pouvant être de l'ordre de plusieurs années. Par ailleurs, ladite transformation de la phase α vers la phase β s'accompagne d'une dilatation des inclusions, elle peut occasionner une casse du vitrage, qui lorsque ce dernier est utilisé par exemple comme façade de bâtiment, peut s'avérer dangereuse.

Il est donc primordial pour le verrier de livrer des vitrages trempés ne présentant aucun risque lors de leur utilisation et donc exempts d'inclusions de sulfures de nickel.

Pour cela, une solution consiste à détecter et éliminer par destruction les vitrages comportant des inclusions de sulfure de nickel. Les traitements de type " Heat Soak Test " permettent par une élévation de la température d'activer la transformation de la phase α vers la phase β.

Le vitrage faisant l'objet de l'essai subi un traitement " Heat Soak Test " consistant en un palier d'une durée d'au moins deux heures à 300°C.

La présente invention a pour but de marquer les vitrages ayant subi ce traitement. Pour cela on procède, avant le traitement "Heat Soak Test " au dépôt sur le bord d'une surface du vitrage d'une encre époxy selon une technique de sérigraphie. L'encre déposée est commercialisée sous la référence n°10, dans la série 8500 par la Société Dubuit. L'encre est au préalable mélangée avec le durcisseur référencé 8599 de la même Société avec une teneur pondérale de 10%. L'encre est ensuite polymérisée à 80°C pendant 30 minutes. Le dépôt de l'encre étant réalisé, le vitrage subi alors le traitement " Heat Soak Test ".

Lors du traitement, la couleur de l'encre qui initialement était jaune devient brune. La variation de la couleur de l'encre déposée va ainsi permettre d'une part au verrier mais essentiellement à l'utilisateur, par exemple une industrie du bâtiment, de reconnaître les vitrages ayant subi le traitement " Heat Soak Test " et ne présentant aucun risque de casses dans le temps.

De plus, les inventeurs ont effectué des mesures précises de la couleur par l'intermédiaire des coordonnées chromatiques L*, a*, b*.

Ces mesures ont été effectuées avec un spectrocolorimètre commercialisé par la Société Minolta sous la référence CM 2002, sous illuminant D₆₅ et avec un angle d'observation de 10°.

Les mesures ont été effectuées sur des échantillons de verre déposé sur un fond noir, sur la face sur laquelle l'encre est déposée.

L'épaisseur d'encre déposée sur les échantillons étaient de 12 microns.

Dans le tableau qui suit, sont regroupées les différentes mesures effectuées sur des échantillons ayant subi un traitement thermique jusqu'à 300°C, avec une durée variable du temps (exprimé en minutes) de séjour à 300°C.

| | **Origine** | **5 min** | **15 min** | **30 min** | **60 min** | **120 min** | **180 min** |
|---|---|---|---|---|---|---|---|
| L* | 65,45 | 63,21 | 52,35 | 45,71 | 38,78 | 34,88 | 34,81 |
| a* | -14,76 | -12,12 | -1,29 | 3,25 | 4,12 | 3,90 | 3,87 |
| b* | 54,77 | 48,05 | 33,84 | 25,82 | 17,19 | 11,45 | 10,85 |

L'origine donne la valeur des paramètres avant le traitement thermique.

Le second tableau qui suit, donne les mesures des coordonnées L*, a*, b*, pour des échantillons ayant subi un traitement thermique ne correspondant pas au traitement " Heat Soak Test " et donc à des températures atteintes variables et des temps de paliers variables également.

| | **Origine** | **250°C-120 min** | **350°C-120 min** | **620°C-3 min** |
|---|---|---|---|---|
| L* | 65,45 | 54,00 | 35,00 | 38,71 |
| a* | -14,76 | -1,10 | 3,83 | 0,78 |
| b* | 54,77 | 36,59 | 7,82 | 6,72 |

Les inventeurs ont encore procédé à la mesure des variations d'une autre caractéristique optique, la densité optique, lors du traitement " Heat Soak Test ".

Dans le tableau qui suit, sont regroupées les mesures de densité optique effectuées sur des échantillons ayant subi un traitement thermique jusqu'à 300°C, avec une durée variable du temps (exprimée en minutes) de séjour à 300°C.

| | **Origine** | **5 min** | **15 min** | **30 min** | **60 min** | **120 min** | **180 min** |
|---|---|---|---|---|---|---|---|
| Densité optique | 0,76 | 0,78 | 1,13 | 1,62 | 2,04 | 2,05 | 2,36 |

Comme précédemment, l'origine donne la valeur de densité optique avant le traitement thermique.

Le dernier tableau, qui suit, donne les mesures de densité optique, pour des échantillons ayant subi un traitement thermique ne correspondant pas au traitement "Heat Soak Test " et donc à des températures atteintes variables et des temps de paliers variables également.

| | **Origine** | **250°C-120 min** | **350°C-120 min** | **620°C-3 min** |
|---|---|---|---|---|
| Densité optique | 0,76 | 1,06 | 2,57 | 3,35 |

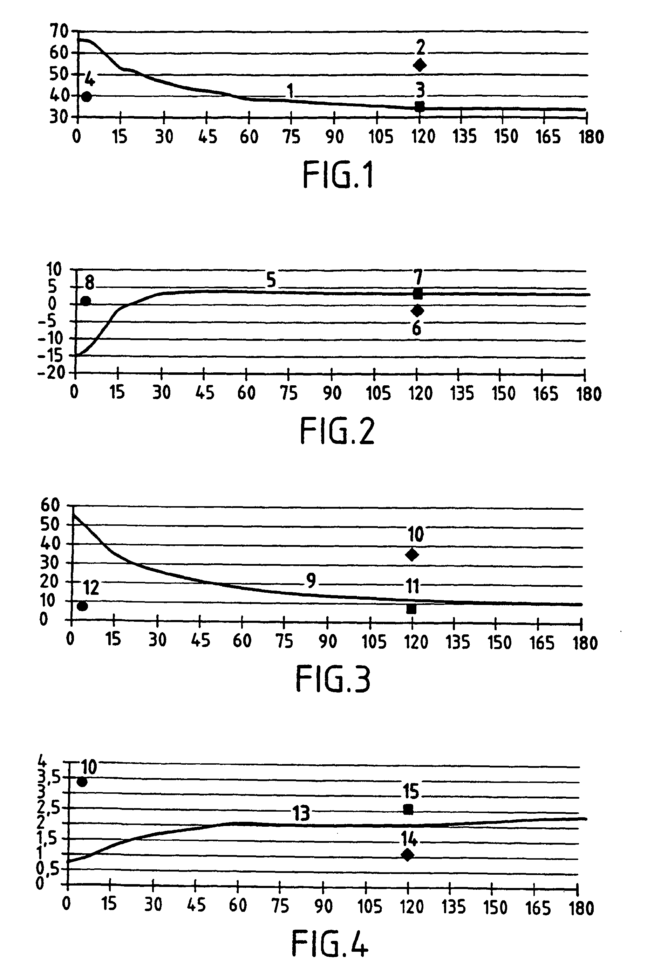

L'ensemble des données de ces tableaux a permis de tracer les courbes sur les figures qui représentent :
□ **figure 1** : les valeurs de la coordonnée L* en fonction du temps de séjour à une température atteinte,
□ **figure 2** : les valeurs de la coordonnée a* en fonction du temps de séjour à une température atteinte,
□ **figure 3 :** les valeurs de la coordonnée b* en fonction du temps de séjour à une température atteinte,
□ **figure 4** : les valeurs de densité optique en fonction du temps de séjour à une température atteinte.

Sur la figure 1, la courbe 1 représente l'évolution de la coordonnée L* en fonction du temps de séjour à 300°C ; le point 2 correspond à un traitement à 250°C pendant 2 heures ; le point 3 correspond au traitement à 350°C pendant 2 heures et le point 4 correspond au traitement à 620°C pendant 3 minutes.

Il apparaît donc clairement que la mesure de cette coordonnée L* permet de savoir si le traitement a été effectué à une température d'au moins 300°C et pendant au moins deux heures. Par contre, il apparaît qu'un traitement à une température plus élevée ou pour un temps de palier supérieur ne soit pas identifiable.

Sur la figure 2, la courbe 5 représente l'évolution de la coordonnée a* en fonction du temps de séjour à 300°C ; le point 6 correspond au traitement à 250°C pendant 2 heures ; le point 7 correspond au traitement à 350°C pendant 2 heures et le point 8 correspond au traitement à 620°c pendant 3 minutes.

L'interprétation de cette figure montre les mêmes faiblesses pour la coordonnée a* que pour la coordonnée L*. En outre, s'il est possible d'identifier la température de traitement jusqu'à 300°C, il semble plus délicat de vérifier la durée du palier à cette température.

Sur la figure 3, la courbe 9 représente l'évolution de la coordonnée b* en fonction du temps de séjour à 300°C ; le point 10 correspond au traitement à 250°C pendant 2 heures ; le point 11 correspond au traitement à 350°C pendant 2 heures et le point 12 correspond au traitement à 620°C pendant 3 minutes.

Il apparaît au vu de la figure 3 que la mesure de la coordonnée b* permet de vérifier que le traitement thermique a été effectué à une température de 300°C pendant au moins 2 heures. En effet, il apparaît qu'un traitement à des températures supérieures est notable.

Par ailleurs, s'il n'est pas possible d'identifier un traitement à 300°C avec un temps de séjour supérieur à 2 heures, cela ne présente pas d'inconvénient. En effet, si la température est imposée pour effectuer ce traitement, en ce qui concerne la durée du palier, seul un temps minimum est requis. Des temps de palier supérieurs ne nuisent pas à l'efficacité du traitement.

La mesure de ces coordonnées et plus particulièrement celle de la coordonnée b* peut permettre d'identifier le traitement thermique subi par l'encre déposée sur le vitrage et donc de garantir la réalisation du traitement " Heat Soak Test ".

Concernant la mesure de la densité optique, la figure 4 montre la courbe 13 qui représente l'évolution de la densité optique en fonction du temps de séjour à 300°C ; le point 14 correspond au traitement à 250°C pendant 2 heures ; le point 15 correspond au traitement à 350°C pendant 2 heures et le point 16 correspond au traitement à 620°C pendant 3 minutes. Il apparaît que cette mesure est très intéressante et peut permettre de garantir d'une part la température du traitement, et une durée du traitement ; toutefois, il apparaît que la garantie d'une durée minimale de 2 heures est plus incertaine.

Par ailleurs, des tests d'adhésion de l'encre au verre après le traitement " Heat Soak Test " ont été effectués. Il s'avère que l'adhésion satisfait à la classification 1 selon la norme ISO 2409. Cela permet notamment de garantir la présence de l'encre sur le vitrage jusqu'à sa mise en place par exemple sur un bâtiment sans risque de voir celle-ci éliminée lors des différentes manipulations.

En outre, l'encre ainsi utilisée peut avoir d'autres fonctions et notamment peut permettre de réaliser une inscription telle qu'une référence ou une marque déposée.

## Revendications

1. Procédé de marquage d'un vitrage trempé, semi-trempé ou durci, soumis à un traitement thermique de détection des sulfures de Nickel (Heat Soak Test) comprenant une température maximale, ledit marquage permettant d'identifier le traitement thermique qu'il a subi, consistant à fixer à sa surface et/ou sur un chant une substance avant ledit traitement thermique, une caractéristique optique de la substance étant modifiée en une caractéristique optique résultante définie par la température maximale atteinte lors dudit traitement thermique, le cas échéant après un palier à ladite température maximale, puis à effectuer ledit traitement thermique.

2. Procédé selon la revendication précédente, **caractérisé en ce que** lors du traitement thermique, le vitrage est porté à une température inférieure à 330°C.

3. Procédé selon la revendication précédente, **caractérisé en ce que** lors du traitement thermique, le vitrage est porté à une température comprise entre 270 et 330°C.

4. Procédé selon l'une des revendications précédentes, **caractérisé en ce que** la caractéristique optique modifiée est la couleur.

5. Procédé selon l'une des revendications précédentes, **caractérisé en ce que** la modification de la caractéristique optique apparaît après un palier de traitement.

6. Procédé selon l'une des revendications précédentes, **caractérisé en ce que** la caractéristique optique de la substance est fonction du temps de séjour à une température atteinte lors du traitement thermique.

7. Procédé selon l'une des revendications précédentes, **caractérisé en ce que** ladite substance est éliminable à une température supérieure à la température du traitement thermique définissant la caractéristique optique résultante.

8. Procédé selon l'une des revendications précédentes, **caractérisé en ce que** la substance est une encre polymérisable.

9. Procédé selon la revendication précédente, **caractérisé en ce que** l'encre est du type époxy, polyuréthane ou acrylique.

10. Procédé selon la revendication 9 ou 10, **caractérisé en ce que** l'encre est polymérisée à une température inférieure à celle modifiant la caractéristique optique lors du traitement thermique.

11. Procédé d'identification d'un vitrage ayant subi un traitement thermique de détection des sulfures de Nickel, comprenant le procédé de marquage de l'une des revendications précédentes, suivi du contrôle du traitement thermique à partir de la caractéristique optique résultante de la substance fixée à la surface du vitrage avant ledit traitement thermique.

## Claims

1. Method of marking toughened, semi-toughened or hardened glazing subjected to a heat treatment for detecting nickel sulphides (Heat Soak Test) comprising a maximum temperature, the said marking identifying the heat treatment that it has undergone, consisting, before the said heat treatment, in fixing a substance to its surface and/or to an edge, one optical characteristic of the substance being modified into a resultant optical characteristic defined by the maximum temperature reached during the said heat treatment, where appropriate after a hold at the said maximum temperature, and then in carrying out the said heat treatment.

2. Method according to the preceding claim, ***characterized in that*** the glazing is heated to a temperature of below 330°C during the heat treatment.

3. Method according to the preceding claim, ***characterized in that*** the glazing is heated to a temperature of between 270 and 330°C during the heat treatment.

4. Method according to one of the preceding claims, ***characterized in that*** the optical characteristic modified is the colour.

5. Method according to one of the preceding claims, ***characterized in that*** the modification of the optical characteristic appears after a treatment temperature hold.

6. Method according to one of the preceding claims, ***characterized in that*** the optical characteristic of the substance depends on the residence time at a temperature reached during the heat treatment.

7. Method according to one of the preceding claims, ***characterized in that*** the said substance can be removed at a temperature above the temperature of the heat treatment defining the resultant optical characteristic.

8. Method according to one of the preceding claims, ***characterized in that*** the substance is a curable ink.

9. Method according to the preceding claim, ***characterized in that*** the ink is of the epoxy, polyurethane or acrylic type.

10. Method according to Claim 8 or 9, ***characterized in that*** the ink is cured at a temperature below that which modifies the optical characteristic during the heat treatment.

11. Method of identifying glazing that has undergone a heat treatment for detecting nickel sulphides, which comprises the marking method of one of the preceding claims followed by the monitoring of the heat treatment on the basis of the resultant optical characteristic of the substance fixed at the surface of the glazing before the said heat treatment.

## Patentansprüche

1. Verfahren zur Markierung eines vorgespannten, halb vorgespannten oder ausgehärteten Glases, das einer Wärmebehandlung zum Nachweis von Nickelsulfiden (Heat Soak Test), die eine maximale Temperatur umfasst, unterworfen worden ist, wobei es die Markierung erlaubt, die Wärmebehandlung, der es unterworfen worden ist, zu identifizieren, welches darin besteht, auf seiner Oberfläche und/oder einer Kante vor der Wärmebehandlung eine Substanz anzubringen, wovon ein optisches Merkmal in ein resultierendes optisches Merkmal verändert wird, das von der Temperatur definiert wird, die in dieser Wärmebehandlung, gegebenenfalls nach einem Halt bei dieser Maximaltemperatur, maximal erreicht wird, und anschließend die Wärmebehandlung durchzuführen.

2. Verfahren nach dem vorhergehenden Anspruch, **dadurch gekennzeichnet, dass** das Glas während der Wärmebehandlung auf eine Temperatur von unter 330 °C gebracht wird.

3. Verfahren nach dem vorhergehenden Anspruch, **dadurch gekennzeichnet, dass** das Glas während der Wärmebehandlung auf eine Temperatur von zwischen 270 und 330 °C gebracht wird.

4. Verfahren nach einem der vorhergehenden Ansprüche, **dadurch gekennzeichnet, dass** das modifizierte optische Merkmal die Farbe ist.

5. Verfahren nach einem der vorhergehenden Ansprüche, **dadurch gekennzeichnet, dass** die Modifizierung des optischen Merkmals nach einem Halten in der Behandlung erscheint.

6. Verfahren nach einem der vorhergehenden Ansprüche, **dadurch gekennzeichnet, dass** das optische Merkmal der Substanz von der Verweilzeit bei einer Temperatur, die in der Wärmebehandlung erreicht worden ist, abhängig ist.

7. Verfahren nach einem der vorhergehenden Ansprüche, **dadurch gekennzeichnet, dass** die Substanz sich bei einer Temperatur von über der Temperatur der Wärmebehandlung, die das resultierende optische Merkmal definiert, entfernen lässt.

8. Verfahren nach einem der vorhergehenden Ansprüche, **dadurch gekennzeichnet, dass** die Substanz eine polymerisierbare Druckfarbe ist.

9. Verfahren nach dem vorhergehenden Anspruch, **dadurch gekennzeichnet, dass** die Druckfarbe vom Typ Epoxidharz, Polyurethan oder Acrylharz ist.

10. Verfahren nach Anspruch 9 oder 10, **dadurch gekennzeichnet, dass** die Druckfarbe bei einer Temperatur von unter derjenigen polymerisiert, die das optische Merkmal in der Wärmebehandlung modifiziert.

11. Verfahren zur Identifizierung eines Glases, das einer Wärmebehandlung zum Nachweis von Nickelsulfiden unterworfen worden ist, welches das Markierungsverfahren nach einem der vorhergehenden Ansprüche umfasst, an welches sich eine Kontrolle der Wärmebehandlung anhand des resultierenden optischen Merkmals der Substanz anschließt, die auf der Glasoberfläche vor dieser Wärmebehandlung angebracht wurde.
